# EUROPÄISCHE PATENTSCHRIFT

(11) **EP 1 969 700 B1**
(45) Veröffentlichungstag und Bekanntmachung des Hinweises auf die Patenterteilung: **19.10.2011**
(21) Anmeldenummer: 06819220.2
(22) Anmeldetag: 02.11.2006
(51) Int. Cl.: H02K 11/00, H02K 1/28, H02K 1/27

(54) **ROTOR, SOWIE EINE ELEKTRISCHE MASCHINE, BEINHALTEND EINEN SOLCHEN**
ROTOR AND AN ELECTRICAL MACHINE COMPRISING SUCH A ROTOR
ROTOR ET MACHINE ÉLECTRIQUE CONTENANT CELUI-CI

(30) Priorität: 29.12.2005 DE 102005062865
(43) Veröffentlichungstag der Anmeldung: 17.09.2008
(73) Patentinhaber: Robert Bosch GmbH, 70442 Stuttgart (DE)
(72) Erfinder: MEIER, Helmut, 77871 Renchen (DE); LOTT, Thomas, 77815 Buehl (DE); WEHRLE, Andreas, 77770 Durbach (DE)
(86) Internationale Anmeldenummer: PCT/EP2006/068024
(87) Internationale Veröffentlichungsnummer: WO 2007/079993

(56) Entgegenhaltungen:
- EP-A- 0 299 137
- WO-A-2005/099065
- US-A- 4 633 109

## Beschreibung

Die Erfindung betrifft einen Rotor, sowie eine elektrische Maschine, beinhaltend einen solchen Rotor nach der Gattung der unabhängigen Ansprüche.

### Stand der Technik

Mit der deutschen Patentanmeldung DE 10 200 40 177 16 ist eine elektrische Maschine mit einem Rotor bekannt geworden, bei der ein als Hohlzylinder ausgebildeter Arbeitsmagnet auf eine Ankerwelle befestigt ist. Der Arbeitsmagnet weist hierbei axiale Anlageflächen auf, die mit korrespondierenden axialen Klemmflächen von zwei Halteelementen zusammen wirken, die am Rotor fixiert sind. Um eine radiale Ausdehnung des Arbeitsmagneten zu ermöglichen, weisen die Klemmflächen radial verlaufende Rillen auf. Zusätzlich ist ein Sensormagnet mittels einer separaten Halterung auf dem Rotor befestigt. Eine solche separate Montage des Arbeitsmagneten und des Sensormagneten ist in der Herstellung relativ Teile- und Prozess-aufwendig.

Die US-A-4633109 zeigt einen Elektromotor, bei dem hülsenförmige Arbeitsmagnete auf einem Rotor angeordnet sind, der als Hohlzylinder ausgebildet ist. Dabei ist der Hohlzylinder mittels einer Endplatte drehfest auf der Rotorwelle befestigt. Im Stator ist drehbar die Rotorwelle gelagert Am Stator ist axial gegenüberliegend zu den Arbeitsmagneten des Rotors eine Leiterplatte mit einem Hallsensor angeordnet, um die Drehlage des Rotors zu erfassen.

### Offenbarung der Erfindung

Die erfindungsgemäße Vorrichtung mit den Merkmalen der unabhängigen Ansprüche hat den Vorteil, dass durch die gemeinsame Halterung des ersten Permanentmagneten und der Sensormagnetbaugruppe zwischen zwei Halteelementen sich der Montage- und Teileaufwand bei der Befestigung des sensor- und Arbeits- Magneten deutlich reduziert. Des Weiteren kann sie Sensorbaugruppe axial näher am Arbeitsmagneten befestigt werden, wodurch der axiale Bauraum reduziert wird. Durch den gemeinsamen Einbau des Arbeitsmagneten mit der Sensorbaugruppe zwischen zwei Halteelementen kann die Toleranzkette der beteiligten Bauteile günstig beeinflusst werden.

Durch die in den Unteransprüchen aufgeführten Maßnahmen ergeben sich vorteilhafte Weiterbildungen und Verbesserungen der im Anspruch 1 angegebenen Merkmale. Sind der erste Permanentmagnet und die Sensorbaugruppe mittels elastischen Elementen zwischen den beiden Halteelementen eingespannt, kann sich der Permanentmagnet beispielsweise durch Temperatureinwirkung axial verformen, ohne dass sich dieser aus seiner Halterung löst. Gleichzeitig ermöglicht die elastische axiale Lagerung auch eine radiale Ausdehnung des Permanentmagneten. Das Federelement kann dabei als ein oder mehrere separate elastische Federringe - oder als integraler Bestandteil der Halteelemente ausgebildet sein.

Günstig ist es, wenn die Halteelemente als auf der Ankerwelle angeordnete Hülsen ausgebildet sind, die zur Anlage des Permanentmagneten und der Sensormagnetbaugruppe eine ringförmige axiale Schulter aufweisen, an denen der Permanentmagnet und die Sensormagnetbaugruppe direkt oder indirekt anliegen.

In einer bevorzugten Ausführung ist der Permanentmagnet als Arbeitsmagnet eines elektrisch kommutierten Motors oder Generators ausgebildet, der beispielsweise aus einem Sintermaterial oder einem kunststoffgebundenen Material gefertigt ist. Der Permanentmagnet kann dabei einstückig ausgebildet oder aus mehreren Teilen zusammengesetzt sein.

Weist die Sensorbaugruppe zur Befestigung des mindestens einen Ringmagneten einen Trägerring auf, so kann dieser zuverlässig axial zusammen mit dem Permanentmagneten zwischen den Halteelementen eingespannt werden und bietet gleichzeitig eine große Variabilität für die konkrete Anordnung und Ausrichtung der Ringmagneten.

So kann der Trägerring beispielsweise als flache Scheibe ausgebildet sein, an denen die Magnetspuren an einer axialen Oberfläche angeordnet sind. Die Ausführung eignet sich für das Zusammenspiel mit axial angeordneten Magnetsensoren, deren magnetfeldempfindliche Flächen sich quer zur Ankerwelle erstrecken. In einer alternativen Ausführung ist der Trägerring als zylindrische Hülse ausgebildet, an dessen Zylindermantelwand die Magnetspuren zur Wechselwirkung mit radial angeordneten Magnetsensoren befestigt sind.

Der Trägerring weist in seinem radial inneren Bereich auf beiden axialen Seiten Anlageflächen auf, mit denen der Trägerring axial zwischen den beiden Halteelementen eingespannt ist. Durch eine solche Sensormagnetbefestigung werden die Ringmagnete mechanisch nicht belastet und haben genügend Freiraum, um sich thermisch auszudehnen.

Ist zwischen dem Permanentmagneten und der Sensorbaugruppe ein Distanzstück angeordnet, kann ein fester Abstand zwischen den Sensormagneten und dem Arbeitsmagnet vorgegeben werden, wodurch der axial über den Arbeitsmagneten überstehenden Wickelkopf des Stators und entsprechende Verschaltungselemente der elektrischen Wicklungen überbrückt werden.

Durch die Ausformung des Distanzteils als Distanzrohr kann dieses direkt oder mittels Zwischenringen zwischen entsprechende Anlageflächen des Permanentmagneten und des Trägerrings eingespannt werden, wodurch sich die Montage der beiden Magneten wesentlich vereinfacht.

Aufgrund der elastischen axialen Lagerung des druckempfindlichen Permanentmagneten können die Halteelemente mittels herkömmlichen Befestigungsverfahren auf der Ankerwelle dreh- und verschiebefest fixiert werden. Hierzu eignet sich besonders die Befestigung mittels Sicherungsringen, Federbauteilen, Schweißen, Kleben oder eine plastische Materialumformung.

Bevorzugt wird der Rotor in eine EC-Maschine eingebaut, bei der der Permanentmagnet durch ein elektrisch kommutiertes Magnetfeld des Stators in Rotation versetzt wird. Gleichzeitig ist am EC-Motor ein Magnetsensor angeordnet, der mit der Sensormagnetbaugruppe zusammen wirkt, um die Drehlage des Rotors für die Kommutierung der Statorspulen zu erfassen.

Durch das erfindungsgemäße Herstellungsverfahren können mehrere Bauteile in einem Montagevorgang gemeinsam auf der Rotorwelle befestigt werden. Dadurch kann die Anzahl der Bauteile, sowie die Montagekosten reduziert werden, dadurch dass die Montage von separaten Halteelementen für die Sensormagnetbaugruppe entfallen.

### Zeichnung

In den Zeichnungen sind verschiedene Ausführungsbeispiele einer erfindungsgemäßen Vorrichtung dargestellt und in der nachfolgenden Beschreibung näher erläutert. Es zeigen:
Figur 1 einen Schnitt durch eine erfindungsgemäße elektrische Maschine und
Figur 2 ein weiteres Ausführungsbeispiel eines erfindungsgemäßen Rotors im Schnitt.

### Beschreibung der Ausführungsbeispiele

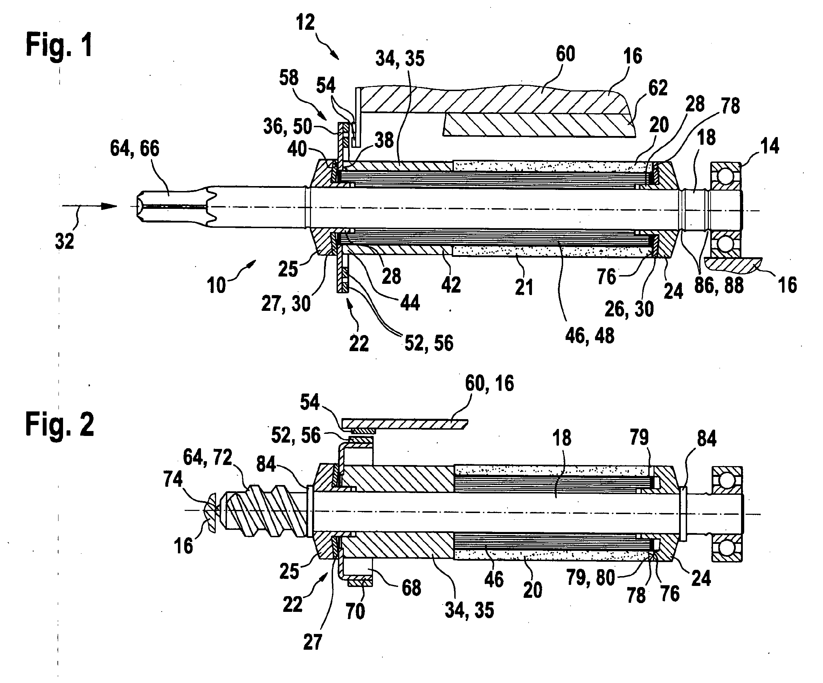

In Figur 1 ist eine elektrische Maschine 12 dargestellt, bei der ein Rotor 10 mittels Gleit- oder Kugellager 14 in einem nicht näher dargestellten Gehäuse 16 gelagert ist. Der Rotor 10 umfasst eine Rotorwelle 18, auf der ein erster Permanentmagnet 20 und eine Sensormagnetbaugruppe 22 zusammen mittels zweier Halteelemente 24, 25 gelagert sind. Der Permanentmagnet 20 ist im Ausführungsbeispiel als einteiliger Hohlzylinder 21 ausgebildet, der beispielsweise aus Sintermaterial oder kunststoffgebundenem Material gefertigt ist, und insbesondere Eisen und/oder Seltene-Erden-Elemente, vorzugsweise NdFeB, enthält. Die Halteelemente 24, 25 sind hülsenförmig ausgebildet und mittels einer Materialumformung 86 der Rotorwelle 18 auf dieser befestigt. Die plastische Materialumformung ist beispielsweise als Rolliernut 88 ausgebildet. Das erste Halteelement 24 weist ein erstes Federelement 26 auf, das auf einem axialen Fortsatz 28 des ersten Halteelements 24 angeordnet ist. Das Federelement 26 ist hier als Tellerfeder 30 ausgebildet, die in axialer Richtung 32 verformbar ist. Axial benachbart zum ersten Permanentmagneten 20 ist als ein Distanzbauteil 34 eine Distanzhülse 35 angeordnet, die einen vorgebbaren Abstand zur Sensormagnetbaugruppe 22 definiert. Die Sensormagnetbaugruppe 22 weist einen ringförmigen Träger 36 auf, der an seinem radial inneren Bereich zwei Anschlagsflächen 38 und 40 aufweist, mit denen der Träger 36 axial zwischen den beiden Halteelementen 24, 25 eingespannt ist. Dabei weist das zweite Halteelement 25 ein zweites Federelement 27 auf, das an der zweiten axialen Anschlagsfläche 40 des Trägers 36 anliegt. Das Distanzbauteil 34 stützt sich mit einem ersten axialen Ende 42 am ersten Permanentmagneten 20 und mit einem zweiten axialen Ende 44 an der ersten Anschlagsfläche 38 ab. Innerhalb des ersten Permanentmagneten 20 ist als ein Rotorkörper 46 ein magnetisches Rückschlusselement 48 angeordnet, um den magnetischen Fluss des Permanentmagneten 20 zu verstärken. Der Rotorkörper 46 erstreckt sich dabei entlang des Distanzbauteils 34. Der ringförmige Träger 36 ist als flache Scheibe 50 ausgebildet, an deren ersten axialen Fläche 38 zwei Ringmagnete 52 axial angeordnet sind. Die beiden Ringmagnete 52 stellen zwei separate Magnetspuren 56 dar, die jeweils separat mit jeweils einem magnetischen Sensor 54 des Elektromotors 12 zusammen wirken können. Die Magnetspuren 56 sind als konzentrische Ringmagnete 52 mit unterschiedlichen Radien ausgebildet. Die magnetisch sensitiven Flächen der Magnetsensoren 54 sind mit geringem axialen Abstand zu den Magnetspuren 56 näherungsweise senkrecht zur Rotorwelle 18 ausgerichtet. Durch die entsprechend magnetisierten Magnetspuren 56 kann die Drehlage und die Drehrichtung des Rotors 10 detektiert werden. Die Drehlageerfassung 58 dient zur elektrischem Kommutierung der an einem Stator 60 angeordneten elektrischen Wicklungen 62 und/oder zur Positionserfassung eines mittels des Elektromotors 12 angetriebenen Bauteils. Als Abtriebselement 64 ist auf der Rotorwelle 18 eine Stirnradvetzahnung 66 ausgebildet, die in ein nicht dargestelltes, korrespondierendes Getriebebauteil eingreift.

Ein weiteres Ausführungsbeispiel eines Rotors 10 ist in Figur 2 dargestellt, bei dem der ringförmige Träger 36 als Hülse 68 mit einer äußeren Zylindermantelwand 70 ausgebildet ist. Über den äußeren Umfang dieser Zylinderwand 70 ist wiederum ein Ringmagnet 52 als eine einzelne Magnetspur 56 angeordnet. Dieser Ringmagnet 52 wirkt mit einem Magnetsensor 54 zusammen, der radial zum hülsenförmigen Träger 36 angeordnet ist. Dabei ist die sensitive Fläche des Magnetsensors 54 tangential zur Rotorwelle 18 angeordnet. Bei beiden Ausführungsbeispielen können auch mehrere Magnetspuren 56 axial nebeneinander angeordnet werden, die mit mehreren korrespondierenden Magnetsensoren 54 zusammenwirken. Auf der Rotorwelle 18 ist eine Schneckenverzahnung 72 als Abtriebselement 64 ausgebildet, die ein Antriebsmoment auf eine entsprechende Verstellmechanik übertragen kann. Hierbei liegt die Rotorwelle 18 beispielsweise mit einem gewölbten Ende 74 am Gehäuse 16 an. Der erste Permanentmagnet 20, das Distanzteil 34 und die Sensormagnetbaugruppe 22 sind wiederum gemeinsam zwischen den beiden Halteelementen 24 und 25 axial eingespannt. Das Distanzbauteil 34 ist hierbei unmittelbar auf der Rotorwelle 18 angeordnet. Dabei weist nur das zweite Halteelement 25 ein einziges zweites Federelement 27 auf, das die axiale Anpresskraft erzeugt. Der Permanentmagnet 20 weist an seiner Anlagefläche 76 eine Beschichtung 79 auf, die aus einem weicheren Material besteht, als die entsprechende Gegenfläche 78 des Halteelements 24. Die Anlagefläche 76 ist ringförmig ausgebildet und liegt hier direkt an der ringförmigen Gegenfläche 78 an. Das Halteelement 24 weist eine Profilierung 80 auf, die beispielsweise als radiale Rillen 82 ausgebildet ist, wodurch der Permanentmagnet 20 radial in gewissen Grenzen beweglich gelagert ist. Die beiden Halteelemente 24, 25 sind in diesem Beispiel mittels Sicherungsringen 84 axial auf der Welle fixiert.

Zur Montage des erfindungsgemäßen Rotors 10 wird beispielsweise das erste Halteelement 24 mittels plastischer Materialumformung 86 auf der Rotorwelle 18 fixiert. Dadurch liegt das erste Federelement 26 axial an der Gegenfläche 78 des ersten Halteelements 24 an. Anschließend wird optional der Rotorkörper 46 auf die Rotorwelle 18 und über den axialen Fortsatz 28 geschoben. Nun wird der erste Permanentmagnet 20 auf die Rotorwelle 18 aufgeschoben, bis dieser am ersten Federelement 26 anliegt. Anschließend wird das Distanzteil 34 auf die Rotorwelle 18 geschoben. Danach wird der ringförmige Träger 36 der Sensormagnetbaugruppe 22 axial auf die Rotorwelle 18 montiert und anschließend mittels des zweiten Federelements 27 des zweiten Halteelements 25 axial gegen das erste Halteelement 24 mit einer vorgebbaren Anpresskraft angedrückt. Danach wird das zweite Halteelement 25, vorzugsweise ebenfalls mittels Materialumformung 86, axial auf der Rotorwelle 18 fixiert, wodurch die drei Bauteile 20, 34, 36 in einem Montageprozess axial federnd zwischen den beiden Halteelementen 24 und 25 gelagert werden. Danach wird der Rotor 10 in das Gehäuse 16 des Elektromotors 12 montiert und die Magnetsensoren 54 entsprechend gegenüber liegend zu den Magnetspuren 56 positioniert.

Es sei angemerkt, dass hinsichtlich der in den Figuren und in der Beschreibung dargestellten Ausfiihrungsbeispiele vielfältige Kombinationsmöglichkeiten der einzelnen Merkmale untereinander möglich sind. So kann beispielsweise die konkrete Ausgestaltung der Halteelemente 24, 25 mit den Federelementen 26, 27 und deren Befestigungen auf der Rotorwelle 18 variiert werden. Beispielsweise können die Federelemente 26, 27 integraler Bestandteil der Halteelemente 24, 25 sein. Des Weiteren können weitere Zwischenringe zwischen dem Permanentmagnet 20, dem Distanzteil 34 und der Sensormagnetbaugruppe 22 angeordnet werden. Ebenso können die Oberflächen der Anlageflächen 76 und der Gegenflächen 78 sowie der weiteren Zwischenflächen beschichtet oder profiliert werden, um die Reibeigenschaften entsprechend anzupassen. Ebenso können die verwendeten Werkstoffe des Permanentmagneten 20, der Ringmagneten 52, sowie des ringförmigen Trägers 36 und der Distanzhülse 34und der Beschichtungen entsprechend den Anforderungen variiert werden. Bevorzugt findet der erfindungsgemäße Rotor 10 Anwendung für EC-Motoren, die zur Verstellung beweglicher Teile im Kraftfahrzeug eingesetzt werden.

## Patentansprüche

1. Rotor (10) einer elektrischen Maschine (12) mit mindestens einem hohlzylindrisch ausgebildeten ersten Permanentmagneten (20), der axiale Anlageflächen (76) aufweist, die mit mindestens einem Halteelement (24) zusammenwirken, und mit einer Sensormagnetbaugruppe (22), **dadurch gekennzeichnet, dass** axial benachbart zum ersten Permanentmagneten (20) ein Distanzbauteil (34) angeordnet ist und der erste Permanentmagnet (20) und die Sensormagnetbaugruppe (22) gemeinsam axial zwischen dem mindestens einen Halteelement (24) und einen anderen Halteelement (25) gehalten wird, wobei der erste Permanentmagnet (20) und die Sensormagnetbaugruppe (22) zusammen mittels der zwei Halteelemente (24, 25) auf einer Rotorwelle (18) des Rotors (10) gelagert sind.

2. Rotor (10) nach Anspruch 1, **dadurch gekennzeichnet, dass** die beiden Halteelemente (24, 25) zusammen mindestens ein Federelement (26, 27) - insbesondere eine Tellerfeder (30) - aufweisen, das den ersten Permanentmagneten (20) und die Sensormagnetbaugruppe (22) axial gegen die zwei Halteelemente (24, 25) elastisch verspannt.

3. Rotor (10) nach Anspruch 1 oder 2, **dadurch gekennzeichnet, dass** die Halteelemente (24, 25) als Hülsen (23) mit einer axialen Schultern (78) ausgebildet sind, an denen sich der erste Permanentmagnet (20) und die Sensormagnetbaugruppe (22) axial abstützten.

4. Rotor (10) nach einem der vorhergehenden Ansprüche, **dadurch gekennzeichnet, dass** der erste Permanentmagnet (20) als Arbeitsmagnet eines EC-Motors oder EC-Generators ausgebildet ist.

5. Rotor (10) nach einem der vorhergehenden Ansprüche, **dadurch gekennzeichnet, dass** die Sensormagnetbaugruppe (22) einen ringförmigen Träger (36) aufweist, auf dem mindestens ein Ringmagnet (52) befestigt ist.

6. Rotor (10) nach einem der vorhergehenden Ansprüche, **dadurch gekennzeichnet, dass** die Sensormagnetbaugruppe (22) sehr als eine ringförmige Magnetspur (56) aufweist, die mit axial oder radial angeordneten Magnetsensoren (54) detektierbar sind.

7. Rotor (10) nach einem der vorhergehenden Ansprüche, **dadurch gekennzeichnet, dass** der Träger (36) zwei axiale Anlageflächen (38, 40) aufweist, auf die die beiden Halteelemente (24, 25) eine Axialkraft ausüben.

8. Rotor (10) nach einem der vorhergehenden Ansprüche, **dadurch gekennzeichnet, dass** zwischen dem ersten Permanentmagneten (20) und der Sensormagnetbaugruppe (22) ein Distanzbauteil (34) angeordnet ist.

9. Rotor (10) nach einem der vorhergehenden Ansprüche, **dadurch gekennzeichnet, dass** das Distanzbauteil (34) als Distanzrohr (35) ausgebildet ist und mit einer axialen Seite (44) gegen den Träger (36) der Sensormagnetbaugruppe (22) und mit seiner anderen axialen Seite (42) gegen den Permanentmagneten (20) gepresst wird.

10. Rotor (10) nach einem der vorhergehenden Ansprüche, **dadurch gekennzeichnet, dass** die Halteelemente (24, 25) auf der Rotorwelle (18) mittels Sicherungsringen (84), Federbauteilen, Laserschweißen, Kleben, Materialumformung oder Schrumpfpassung drehfest fixiert sind.

11. Elektrische Maschine (12) mit einem Rotor (10) nach einem der vorhergehenden Ansprüche, **dadurch gekennzeichnet dass** der erste Permanentmagnet (20) mit einem um den Rotor (10) umlaufenden, in einem Stator (60) elektrisch kommutierten Magnetfeld, und die Sensorbaugruppe (22) mit mindestens einem, radial oder axial zu dieser angeordneten Magnetsensor (72) zusammenwirkt.

12. Verfahren zur Herstellung eines Rotors (10) nach einem der vorhergehenden Ansprüchen, **gekennzeichnet durch** folgende Schritte:
- ein Halteelement (24) wird axial auf einer Rotorwelle (18) fixiert
- danach wird ein hohlzylindrischer Permanentmagnet (22) axial auf die Rotorwelle (18) geschoben
- danach wird ein Distanzbauteil (34) axial auf die Rotorwelle (18) geschoben
- danach wird eine Sensormagnetbaugruppe (20) mit einem ringförmigen Träger (36) auf die Rotorwelle (18) geschoben
- danach wird ein zweites Halteelement (25) auf die Rotorwelle (18) geschoben und federnd gegen das erste Halteelement (24) mit einer vorgebbaren Anpresskraft angepresst
- danach wir das zweite Halteelement (25) axial auf der Rotorwelle (18) fixiert.

## Claims

1. Rotor (10) of an electrical machine (12) having at least one hollow-cylindrical first permanent magnet (20), which has axial bearing faces (76), which interact with at least one holding element (24), and having a sensor magnet assembly (22), **characterized in that** a spacer component (34) is arranged axially adjacent to the first permanent magnet (20), and the first permanent magnet (20) and the sensor magnet assembly (22) are held jointly axially between the at least one holding element (24) and another holding element (25), the first permanent magnet (20) and the sensor magnet assembly (22) being mounted together by means of the two holding elements (24, 25) on a rotor shaft (18) of the rotor (10).

2. Rotor (10) according to Claim 1, **characterized in that** the two holding elements (24, 25) together have at least one spring element (26, 27), in particular a disc spring (30), which elastically clamps the first permanent magnet (20) and the sensor magnet assembly (22) axially against the two holding elements (24, 25).

3. Rotor (10) according to Claim 1 or 2, **characterized in that** the holding elements (24, 25) are in the form of sleeves (23) with axial shoulders (78), on which the first permanent magnet (20) and the sensor magnet assembly (22) are supported axially.

4. Rotor (10) according to one of the preceding claims, **characterized in that** the first permanent magnet (20) is in the form of a working magnet of an EC motor or EC generator.

5. Rotor (10) according to one of the preceding claims, **characterized in that** the sensor magnet assembly (22) has an annular carrier (36), on which at least one ring magnet (52) is fastened.

6. Rotor (10) according to one of the preceding claims, **characterized in that** the sensor magnet assembly (22) has more than one annular magnet track (56), with it being possible for said magnet tracks to be detected by axially or radially arranged magnet sensors (34).

7. Rotor (10) according to one of the preceding claims, **characterized in that** the carrier (36) has two axial bearing faces (38, 40), on which the two holding elements (24, 25) exert an axial force.

8. Rotor (10) according to one of the preceding claims, **characterized in that** a spacer component (34) is arranged between the first permanent magnet (20) and the sensor magnet assembly (22).

9. Rotor (10) according to one of the preceding claims, **characterized in that** the spacer component (34) is in the form of a spacer tube (35) and is pressed with one axial side (44) against the carrier (36) of the sensor magnet assembly (22) and with its other axial side (42) against the permanent magnet (20).

10. Rotor (10) according to one of the preceding claims, **characterized in that** the holding elements (24, 25) are fixed in rotationally fixed fashion on the rotor shaft (18) by means of securing rings (84), spring components, laser welding, adhesive bonding, material reshaping or shrink fitting.

11. Electrical machine (12) having a rotor (10) according to one of the preceding claims, **characterized in that** the first permanent magnet (20) interacts with a magnetic field which runs around the rotor (10) and is electrically commutated in a stator (60), and the sensor magnet assembly (22) interacts with at least one magnet sensor (72), which is arranged radially or axially with respect thereto.

12. Method for producing a rotor (10) according to one of the preceding claims, **characterized by** the following steps:
- a holding element (24) is fixed axially on a rotor shaft (18),
- then a hollow-cylindrical permanent magnet (22) is pushed axially onto the rotor shaft (18),
- then a spacer component (34) is pushed axially onto the rotor shaft (18),
- then a sensor magnet assembly (22) with an annular carrier (36) is pushed onto the rotor shaft (18),
- then a second holding element (25) is pushed onto the rotor shaft (18) and is pressed in resilient fashion against the first holding element (24) with a predeterminable contact-pressure force,
- then the second holding element (25) is fixed axially on the rotor shaft (18).

## Revendications

1. Rotor (10) d'une machine électrique (12) comprenant au moins un premier aimant permanent (20) de configuration cylindrique creuse, lequel présente des surfaces d'application axiales (76) qui interagissent avec au moins un élément de maintien (24), et comprenant un sous-ensemble magnétique de détection (22), **caractérisé en ce qu'**un composant d'espacement (34) est juxtaposé axialement au premier aimant permanent (20) et le premier aimant permanent (20) ainsi que le sous-ensemble magnétique de détection (22) sont maintenus conjointement dans le sens axial entre l'au moins un élément de maintien (24) et un autre élément de maintien (25), le premier aimant permanent (20) et le sous-ensemble magnétique de détection (22) étant logés conjointement sur un arbre de rotor (18) du rotor (10) au moyen des deux éléments de maintien (24, 25).

2. Rotor (10) selon la revendication 1, **caractérisé en ce que** les deux éléments de maintien (24, 25) ensemble présentent au moins un élément ressort (26, 27), notamment une rondelle ressort (30), qui produit une contrainte élastique axiale du premier aimant permanent (20) et du sous-ensemble magnétique de détection (22) contre les deux éléments de maintien (24, 25).

3. Rotor (10) selon la revendication 1 ou 2, **caractérisé en ce que** les éléments de maintien (24, 25) sont réalisés sous la forme de douilles (23) avec des épaulements axiaux (78) sur lesquels le premier aimant permanent (20) et le sous-ensemble magnétique de détection (22) s'appuient dans le sens axial.

4. Rotor (10) selon l'une des revendications précédentes, **caractérisé en ce que** le premier aimant permanent (20) est réalisé sous la forme d'un aimant de travail d'un moteur EC ou d'un générateur EC.

5. Rotor (10) selon l'une des revendications précédentes, **caractérisé en ce que** le sous-ensemble magnétique de détection (22) présente un support (36) de forme annulaire sur lequel est fixé au moins un aimant annulaire (52).

6. Rotor (10) selon l'une des revendications précédentes, **caractérisé en ce que** le sous-ensemble magnétique de détection (22) présente plusieurs pistes magnétiques (56) de forme annulaire qui peuvent être détectées avec des capteurs magnétiques (54) disposés dans le sens axial ou radial.

7. Rotor (10) selon l'une des revendications précédentes, **caractérisé en ce que** le support (36) présente deux surfaces d'appui axiales (38, 40) sur lesquelles les deux éléments de maintien (24, 25) exercent une force axiale.

8. Rotor (10) selon l'une des revendications précédentes, **caractérisé en ce qu'**un composant d'espacement (34) est disposé entre le premier aimant permanent (20) et le sous-ensemble magnétique de détection (22).

9. Rotor (10) selon l'une des revendications précédentes, **caractérisé en ce que** le composant d'espacement (34) est réalisé sous la forme d'un tube d'espacement (35) et est comprimé avec un côté axial (44) contre le support (36) du sous-ensemble magnétique de détection (22) et avec un autre côté axial (42) contre l'aimant permanent (20).

10. Rotor (10) selon l'une des revendications précédentes, **caractérisé en ce que** les éléments de maintien (24, 25) sont fixés de manière solidaire en rotation sur l'arbre de rotor (18) au moyen de circlips (84), de composants à ressort, par soudage laser, collage, déformation de matière ou ajustement fretté.

11. Machine électrique (12) comprenant un rotor (10) selon l'une des revendications précédentes, **caractérisé en ce que** le premier aimant permanent (20) interagit avec un champ magnétique en révolution autour du rotor (10) et à commutation électrique dans un stator (60) et le sous-ensemble magnétique de détection (22) avec au moins un capteur magnétique (72) disposé dans le sens radial ou axial par rapport à celui-ci.

12. Procédé de fabrication d'un rotor (10) selon l'une des revendications précédentes, **caractérisé par** les étapes suivantes:
- un élément de maintien (24) est fixé dans le sens axial sur un arbre de rotor (18),
- un aimant permanent cylindrique creux (20) est ensuite glissé sur l'arbre de rotor (18) dans le sens axial,
- un composant d'espacement (34) est ensuite glissé sur l'arbre de rotor (18) dans le sens axial,
- un sous-ensemble magnétique de détection (22) muni d'un support (36) de forme annulaire est ensuite glissé sur l'arbre de rotor (18),
- un deuxième élément de maintien (25) est ensuite glissé sur l'arbre de rotor (18) et comprimé par effet ressort contre le premier élément de maintien (24) avec une force de pressage pouvant être prédéfinie,
- le deuxième élément de maintien (25) est ensuite fixé sur l'arbre de rotor (18) dans le sens axial.
